# EUROPEAN PATENT SPECIFICATION

(11) **EP 1 638 348 B1**
(45) Date of publication and mention of the grant of the patent: **18.07.2007**
(21) Application number: 04734207.6
(22) Date of filing: 21.05.2004
(51) Int. Cl.: H04M 3/56, H04Q 7/28

(54) **METHOD AND NETWORK STRUCTURE FOR MOVING A CALL-LEG**
VERFAHREN UND NETZWERKSTRUKTUR ZUR BEWEGUNG VON VERBINDUNGSZWEIGEN
PROCEDE ET STRUCTURE DE RESEAU POUR LE TRANSFERT D'UNE BRANCHE D'APPEL

(30) Priority: 25.06.2003 CN 03137492
(43) Date of publication of application: 22.03.2006
(73) Proprietor: Huawei Technologies Co., Ltd., Longgang District, Shenzhen, Guangdong 518129 (CN)
(72) Inventor: MIAO, Caixia, Huawei Administration Building, Shenzhen, Guangdong 518129 (CN); LIU, Hao, Huawei Administration Building, Shenzhen, Guangdong 518129 (CN); MEI, Shaojie, Huawei Administration Building, Shenzhen, Guangdong 518129 (CN); LI, Yan, Huawei Administration Building, Shenzhen, Guangdong 518129 (CN); ZHU, Yong, Huawei Administration Building, Shenzhen, Guangdong 518129 (CN)
(74) Representative: Körber, Martin Hans
(86) International application number: PCT/CN2004/000515
(87) International publication number: WO 2004/114687

(56) References cited:
- EP-A1- 1 107 560
- US-A- 6 111 943
- US-A- 6 115 461
- PARLAY GROUP INC.: "Parlay APIs 2.1 Generic Call Control Service Interfaces"[Online] 26 June 2000 (2000-06-26), pages 1-85, XP002382324 Retrieved from the Internet: URL:http://www2.informatik.hu-berlin.de/~x ing/Lib/ParlaySpec/parlayAPIs_2_1_CallCont rolInterfaces_2_1.pdf> [retrieved on 2006-05-23]
- PARLAY GROUP INC.: "Parlay APIs 2.1 Call Processing Sequence Diagrams"[Online] 26 June 2000 (2000-06-26), pages 1-57, XP002382325 Retrieved from the Internet: URL:http://www2.informatik.hu-berlin.de/~x ing/Lib/ParlaySpec/parlayAPIs_2_1_CallProc SeqDiags_2_1.pdf> [retrieved on 2006-05-23]

## Description

### Field of the Technology

The present invention relates generally to a call moving technology in a telecommunication system, and more particularly to a method and network structure for moving a call leg.

### Background of the Invention

In a telecommunication system, based on actual requirement, there is a multiparty call mode; in this mode a call has three or more than three call parties and each party is called a call leg. A call leg communicates with other call legs that belong to the same call. During communication, based on requirement a call leg may need to move from one call to another and then communicates with call legs of said another call.

In the present technologies, an application server encapsulates and makes abstract of the underlying telecommunication network capabilities to provide a simple and open service capacity interface to applications, and the application services are created through the open service capacity interface. For the multiparty call situation mentioned above, the present technology, such as Parlay/OSA API, provides only a creating leg and releasing leg methods that cannot move a leg from one call to another directly.

The document "Parlay APIs 2.1: Generic Call Control Service Interfaces" defines call control service interfaces, methods, parameters and state models that are of interest to developers of enterprise-based client applications and defines an interface for moving a call leg from a first subconference of a conference call to a second subconference of the conference call which has the session ID of the call leg to be moved and the session ID of the second subconference as interface input parameters.

With this technology, when a leg of one call wants to move to another call, the only way to do is first to release from the original call to terminate the connection with the original call, and then create the leg in the destination call to connect with the destination call. Although in this way, a call leg can be moved from one call to another, but for the user using this leg to communicate, the call leg must create a new connection with destination call after releasing form the original call, not only this way is complex, but also during the call is moved the user communication is interrupted so as to interfere the continuity of communication, and data and states in the original call are changed so as to lose some important information; this is a disadvantage for some services that need communication continuity such as charging service.

Obviously, the present technology cannot implement a call-leg-moving from one call to another without terminating the communication of this leg.

### Summary of the Invention

The invention provides a method and a network structure that can move a call leg between calls without terminating the communication of this leg.

The method according to the present invention comprises the steps of creating a call-leg-moving interface with reference parameters which are an identifier of a call leg to be moved and an identifier of a destination call; invoking by an application said call-leg-moving interface with an identifier of a call leg to be moved and an identifier of a destination call to which said call leg is to be moved, thereby moving said call leg from an original call to said destination call, whereby the step of moving said call leg comprises the steps of releasing the voice channel resource occupied by said call leg in said original call and allocating voice channel resources of said destination call to said call leg wherein the state and data of said call leg is kept unchanged in said original call.

Advantageously, said step of moving said call leg comprises changing a call identifier of said call leg from an identifier of said original call to said identifier of said destination call through setting a message of said call leg; and sending a call leg move request from said original call to said destination call; and, after having received said call leg move request sent from said original call, said destination call determining whether its resource is enough, if it is enough, said destination call allocating resource to said call leg and said call leg move is successful, otherwise it is failure.

In this case said destination call advantageously notifies said application about call leg move result.

Advantageously, the step of moving said call leg further comprises notifying a user terminal corresponding to said call leg to be moved that said call leg will be moved to said destination call.

Advantageously, said state and data comprise media type, charging policy and terminal information.

Advantageously, said original call and destination call are a multiparty call, respectively.

Advantageously, the step of moving said call leg further comprises keeping said call leg in a suspending state in said original call.

The network structure according to the present invention comprises a telecommunication network, a capability-abstracting layer and an application layer; said capability-abstracting layer abstracts capabilities of the telecommunication network into independent functions, wherein each independent function provides a corresponding interface to said application layer; and, through invoking interfaces, said application layer can provide the services implemented by the independent functions; and wherein said capability-abstracting layer further comprises a call-leg-moving function, and a call-leg-moving interface provided to said application layer with at least two parameters including an identifier of a call leg to be moved and an identifier of a destination call wherein said application layer is configured to invoke said call-leg-moving interface with an identifier of a call leg to be moved and an identifier of a destination call to which said call leg is to be moved in order to move said call leg from an original call to said destination call by releasing the voice channel resource occupied by said call leg in said original call and allocating voice channel resources of said destination call to said call leg wherein the state and data of said call leg is kept unchanged in said original call.

Advantageously, said call-leg-moving interface is a newly added interface to Parlay/OSA API or a newly added open interface.

Advantageously, said call-leg-moving interface further includes one 'out' parameter for showing a result of call-leg-moving: true or false.

The invention provides a call-leg-moving interface to the application layer, and when an application wants to move a call leg, it simply invokes the call-leg-moving interface to implement the call-leg-moving. During a call leg is moved to another call, the communication of this leg is not terminated for the reason of the call-leg-moving, thereby providing the continuous communication service, and the data and states in the original call be kept, so communication continuity in the original call can be kept; this is benefit for service with continuity requirement, such as continuously charging etc.

The invention provides a simple, convenient, easy to implement and spread service for call leg move from one call to another.

### Brief Description of the Drawings

Fig. 1 shows a diagram of network structure with open interface for call-leg-moving provided in the embodiment of the present invention.
Fig. 2 shows a flowchart diagram of the method in the embodiment of the present invention.
Fig. 3 shows a flowchart diagram implementing a call-leg-moving function in the embodiment of the present invention.
Fig. 4 shows a diagram about a multiparty chat on a Web page in the embodiment of the present invention.
Fig. 5 shows a sequence diagram of a call-leg-moving of the method in the embodiment of the present invention.

### Detailed Description of the Embodiment

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

The invention provides an open interface for call-leg-moving to applications; through the open interface an application implements some services with relational function including call-leg-moving service such as call hold and call moving etc.

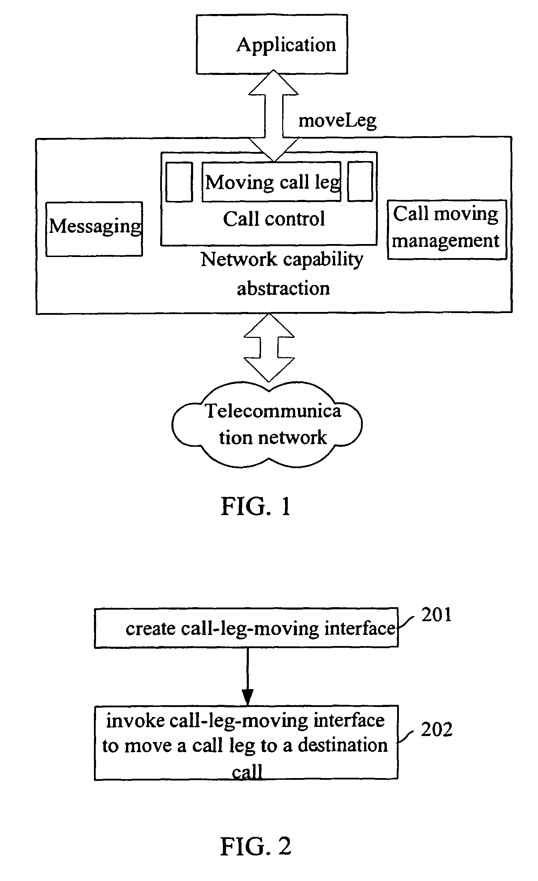

Fig. 1 shows a network structure of a telecommunication network; there are three layers: an upper layer, an intermediate layer and a lower layer. The upper layer is an application layer; the intermediate layer is a capability-abstracting layer; the lower layer is a telecommunication network layer. The capability-abstracting layer makes capability abstract of the lower telecommunication layer and encapsulates the capabilities into independent functions, such as call control, messaging, moving management etc.; each independent function corresponds to an interface provided to the applications. Through invoking the interfaces an application uses the capacities of a telecommunication network in order to implement telecommunication service, each independent function includes some small functions. In this invention, a call-leg-moving function is newly added in capability-abstracting layer, and the call-leg-moving interface corresponding to the call-leg-moving function and its parameters are added, the call-leg-moving interface is used to provide newly added call-leg-moving function to application layer; the parameters of the call-leg-moving interface at least include the interface reference parameters which are: the call leg identifier to be moved and the destination call identifier to be moved to, and the interface reference parameters further include one output parameter for showing the moving result. Referring to Fig. 1, in this embodiment the call-leg-moving function is one part of the whole call control function.

In this embodiment, a call-leg-moving interface is implemented by defining a new IrpMultiPartyCall open interface. The IrpMultiPartyCall interface has one movelegmethod with two parameters: destCall: in IpMultiPartyCall and legID: TpCallLegIdentifier, the call-leg-moving function is implemented by this IrpMultiPartyCall interface; wherein, the destCall: in IpMultiPartyCall, which is the interface reference of the destination call that the call leg will be moved to, is the identifier of the destination call; and the legID: TpCallLegIdentifier, which is the identifier of the call leg to be moved, includes a ID and a interface reference of the call leg. The IrpMultiPartyCall interface further has output parameter which is a Boolean value in this embodiment, after the IrpMultiPartyCall interface invoked, this output parameter is used for showing the result of call leg move: when it is a true value, it shows that the call leg move is successful; when it is a false value, it shows that the call leg move is failure.

In other embodiments of the invention, the call-leg-moving function can be added to an existing interface that will be implemented as follow:

In the Parlay API multiparty call, the call-leg-moving function is added to the IpMultiPartyCall interface in order to implement making a call leg move form one call to another, IpMultiPartyCall interface includes moveleg method with parameters: destCall: in IpMultiPartyCall and legID: in TpCallLegIdentifier; wherein the destCall: in IpMultiPartyCall, which is the interface reference of the destination call that the call leg will be moved to, is used as identifier of the destination call; and the legID: TpCallLegIdentifier, which is the identifier of the call leg to be moved, includes a ID and a interface reference of the call leg. Also, the IpMultiPartyCall interface further has a output parameter which is Boolean value in this embodiment, after the IrpMultiPartyCall interface invoked, this output parameter is used for showing the result of call leg move: when it is a true value, it shows that the call leg move is successful; when it is a false value, it shows that the call leg move is failure.

Fig. 2 shows that the method of the embodiment of the present invention includes the following steps:
Step 201. Create a call-leg-moving interface and its parameters for moving a call leg from the original call to a destination call; said parameters at least include the interface reference parameters which are the call leg identifier to be moved and the destination call identifier to be moved to; the said parameters further include output parameter which is used to the result of the call -leg move.
Step 202. When an application wants to move a call leg, the interface reference parameters are decided according to the call leg to be moved and the destination call that the call leg will be moved to, and the application invokes the call-leg-moving interface with the interface reference parameters; and then the connection between the call leg and the original call is broken by the call-leg-moving interface and the voice channel resource occupied by the call leg in the original call is released; later a voice channel resource in the destination call is allocated to the call leg and the call leg is moved to the destination call; finally a result of the call -leg move is returned to the application.

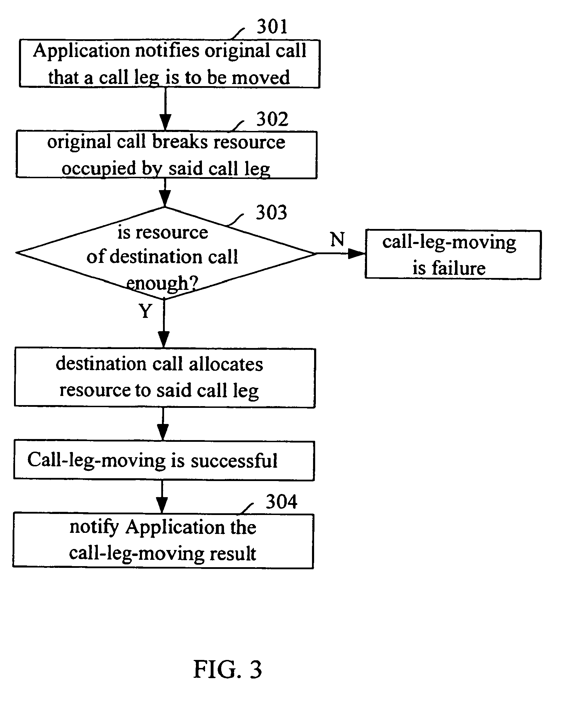

Fig. 3 shows that the call-leg-moving interface implements the call leg move method with the following steps:
Step 301, the application notifies the original call that a call leg will be moved to the destination call;
Step 302, the original call breaks the voice channel resource occupied by the call leg; the original call identifier in the call message is changed to the destination call identifier, and then a call leg move request is sent to the destination call; wherein the call messages at least include: the call identifier, the media type, the charging policy and the terminal information; changing the belonging of the leg is implemented by changing the call identifier of the call messages, in this embodiment the media type, the charging policy and the terminal information are kept unchanged;
Step 303, having received the call leg move request from the original call, the destination call determines whether there is enough voice channel resource to allocate a voice channel to the call leg, if it is, a voice channel is allocated to the call leg and the call-leg-moving is successful, otherwise the call-leg-moving is failure;
Step 304, based on the result of Step 303, the destination call will notify the result to the original call, and then the original call will notify to the application.

It can be seen from the mention above that the call-leg-moving method is as follow: break the voice channel resource occupied by the call leg in the original call, change messages related to the original call to messages related to the destination call, then allocate voice channel resource in the destination call to the call leg, which makes that the call leg can communicate with other call legs in the destination call. In this embodiment, during the call leg is moved the call leg state and data in the original call are kept unchanged, and the call leg is in a suspended state in the original call so as to hold this call leg in original call. Obviously, at Step 302, it is informed to the user terminal corresponding to the call leg that the call leg will be moved to the destination call in order that the user terminal can understand its call environment in time.

It should be emphasized that two pre-conditions must be satisfied to implement the call-leg-moving function: first, the call leg must break connection of the resource having been allocated by the original call; secondly, the destination call has been created before the call leg moves to it.

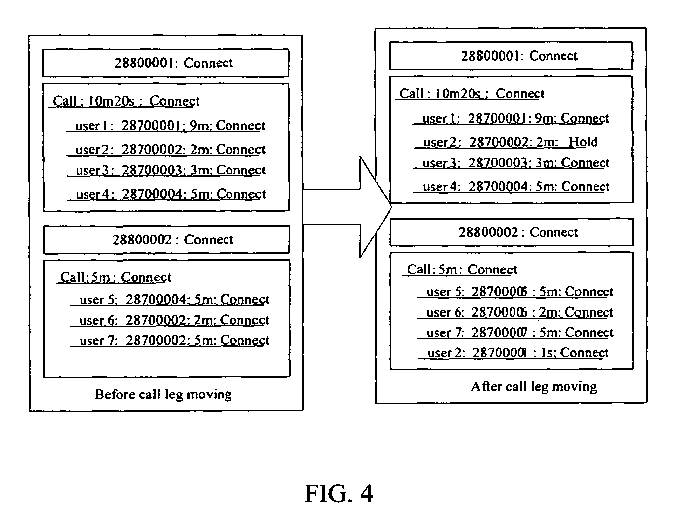

In Fig. 4, a multiparty chat service on a Web page is used to describe an application detail of the embodiment of the present invention.

A Web multiparty chat service provides a Web page through which multiparty calls can be created and all current calls and the call parties in each call can be seen and managed.

Fig. 4 shows two calls with identifiers 28800001 and 28800002, respectively. The call 28800001 has continued 10 minutes and 20 seconds with four users: the user 1, 2, 3 and 4; each of them is one call party i.e. one call leg of the call. The call 28800002 has continued 5 minutes with three users: the user 5, 6 and 7.

As shown on the left side of the Fig. 4, in call 28800001 before a call leg is moved out, the user 1 with identifier 2870001 has communicated 9 minutes and is at the connection state, the user 2 with identifier 2870002 has communicated 2 minutes and is at the connection state, the user 3 with identifier 2870003 has communicated 3 minutes and is at the connection state, and the user 4 with identifier 2870004 has communicated 5 minutes and is at the connection state; in the call 28800002 before a call leg is moved in, the user 5 with identifier 2870004 has communicated 5 minutes and is at the connection state, the user 6 with identifier 2870002 has communicated 2 minutes and is at the connection state, and the user 7 with identifier 2870002 has communicated 5 minutes and is at the connection state.

During call, when user 2 or other authenticated persons drag the user 2 call leg from the call 28800001 to the call 28800002, it is equivalent that user 2 or other authenticated persons send out a call leg move request; and then the application will invoke the call-leg-moving interface to perform the call-leg-moving.

As shown in the right side of the Fig. 4, after the call leg has been moved, the user 2 in the call 28800001 is at a hold state and its call leg is suspended, so it cannot communicate with other three users in the call, but its call messages are kept unchanged in the call 28800001; the user 2 is connected to the call 28800002 and can communicate with the user 5, 6 or 7.

Naturally, when the user 2 has finished the communication in the call 28800002, it can be returned to the call 28800001 and communicates with users 1, 3 or 4 continuously, since its call messages, such as the media type and the charging information, are kept unchanged during departure.

Besides, when the call leg of the user 2 in the call 28800001 is at a suspended state, it can be released at any time; this means that the user 2 is disconnected with the call. Later, if the user 2 wants to join the call 28800001 again, user 2 should create the connection again.

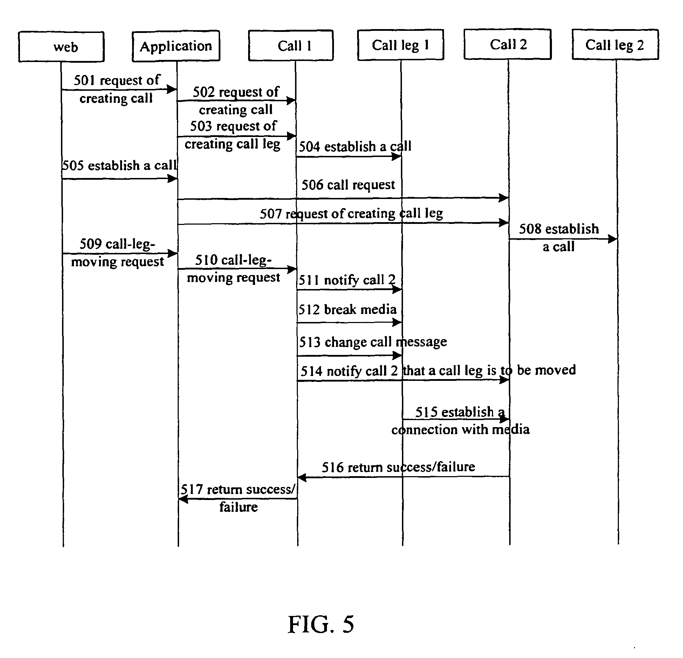

Fig. 5 is a sequence diagram of a call leg move service based on the Fig. 3 call-leg-moving operation.
Steps 501 - 504, user A invokes service application on a Web page and initiates a multiparty call request; the application creates a multiparty call with the call identifier MPCC Call1, and then according to the calling number set by user A, the MPCC Call1 creates a call leg with the identifier callLeg1 for user A.
Steps 505 - 508, user B invokes service application on a Web page and initiates another multiparty call request on a Web page; the application creates a multiparty call with the call identifier MPCC Call2, and then according to the calling number set by user B, the MPCC Call2 creates a call leg with the identifier callLeg2 for user B.
Steps 509 - 510, during the call is in progress, user A drags the callLegl from MPCC Call1 to MPCC Call2 on the Web page, and then the Application notifies MPCC Call1 that callLeg1 need to be moved to MPCC Call2.
Steps 511 - 512, after having received the move leg notification, MPCC Call1 obtains the call leg to be moved according to the legID: in TpCallLegIdentifier and notifies user of callLeg 1 that the call leg will be moved from MPCC Call to MPCC Call2; and then MPCC Call1 breaks the resource of callLeg1 allocated by MPCC Call1; from now on callLeg 1 is suspended and cannot communicate with other parties of MPCC Call1.
Step 513, MPCC Call1 notifies callLeg1 to update its call message; those messages related to MPCC Call1 are changed to messages related to MPCC Call2, such as call identifier and the media resource channel etc.; other messages, such as media type, charging policy and terminal information etc, are kept unchanged.
Step 514, MPCC Call1 obtains the destination call MPCC Call2 that the call leg callLegl will be moved to according to the destCall: in IpMultiPartyCall, and then MPCC Call1 notifies MPCC Call2 the callLeg1 to be joined to MPCC Call2and transfers the call leg identifier to MPCC Call2.
Steps 515-516, after having received the move leg request from MPCC Call1, MPCC Call2 allocates resource to callLeg 1 and will report the allocation result: true or false to MPCC Call1; if the resource allocation is successful, callLeg1 can communicate with other legs in MPCC Call2; naturally, whether the resource allocation is successful depends on whether there are enough resources in MPCC Call2 and whether MPCC Call2 accepts the callLeg1.
Step 517, after having received the result from MPCC Cal12, MPCC Call1 determines whether the call leg move is successful; if it is successful, MPCC Call1 will return a true value to the Application, otherwise a false value.

Said resource in the above description, Steps 1 to 17, is the voice channel resource.

Although the embodiments of the present invention are described, it is apparent that various modifications and changes can be made within the scope of the present invention.

## Claims

1. A method implementing a call leg move comprising the steps of
creating (201) a call-leg-moving interface with reference parameters which are an identifier of a call leg to be moved and an identifier of a destination call;
invoking (202) by an application said call-leg-moving interface with an identifier of a call leg to be moved and an identifier of a destination call to which said call leg is to be moved, thereby
moving said call leg from an original call to said destination call,
whereby the step of moving said call leg comprises the steps of
releasing (302) the voice channel resource occupied by said call leg in said original call and
allocating (303) voice channel resources of said destination call to said call leg
wherein
the state and data of said call leg is kept unchanged in said original call.

2. The method according to Claim 1, **characterized in that**, said step of moving said call leg comprises:
changing a call identifier of said call leg from an identifier of said original call to said identifier of said destination call through setting a message of said call leg; and
sending (514) a call leg move request from said original call to said destination call; and,
after having received said call leg move request sent from said original call, said destination call determining whether its resource is enough, if it is enough, said destination call allocating resource to said call leg and said call leg move is successful, otherwise it is failure.

3. The method according to Claim 2, further comprising said destination call notifying said application about call leg move result.

4. The method according to Claim 1, **characterized in that**, the step of moving said call leg further comprises notifying (511) a user terminal corresponding to said call leg to be moved that said call leg will be moved to said destination call.

5. The method according to Claim 1, **characterized in that**, said state and data comprise media type, charging policy and terminal information.

6. The method according to Claim 1, **characterized in that**, said original call and destination call are a multiparty call, respectively.

7. The method according to Claim 1, **characterized in that**, the step of moving said call leg further comprises keeping said call leg in a suspending state in said original call.

8. A network structure for a call leg move comprising a telecommunication network, a capability-abstracting layer and an application layer; said capability-abstracting layer abstracts capabilities of the telecommunication network into independent functions, wherein each independent function provides a corresponding interface to said application layer; and, through invoking interfaces, said application layer can provide the services implemented by the independent functions;
and wherein
said capability-abstracting layer further comprises a call-leg-moving function, and a call-leg-moving interface provided to said application layer with at least two parameters including an identifier of a call leg to be moved and an identifier of a destination call
wherein said application layer is configured to
invoke (202) said call-leg-moving interface with an identifier of a call leg to be moved and an identifier of a destination call to which said call leg is to be moved in order to move said call leg from an original call to said destination call by releasing (302) the voice channel resource occupied by said call leg in said original call and allocating (303) voice channel resources of said destination call to said call leg
wherein
the state and data of said call leg is kept unchanged in said original call.

9. The network structure according to Claim 8, **characterized in that**, said call-leg-moving interface is a newly added interface to Parlay/OSA API.

10. The network structure according to Claim 8, **characterized in that**, said call-leg-moving interface is a newly added open interface.

11. The network structure according to Claim 8, **characterized in that**, said call-leg-moving interface further includes one 'out' parameter for showing a result of call-leg-moving: true or false.

## Patentansprüche

1. Verfahren, das eine Anrufzweigbewegung implementiert, mit folgenden Schritten:
Erzeugen (201) einer Anruf-Zweig-Bewegungs-Schnittstelle mit Bezugsparametern, die eine Identifizierung eines zu bewegenden Anrufzweigs und eine Identifizierung eines Zielanrufs sind;
Aufrufen (202) der Anruf-Zweig-Bewegungs-Schnittstelle durch eine Anwendung mit einer Identifizierung eines zu bewegenden Anrufzweigs und einer Identifizierung eines Zielanrufs, zu dem der Anrufzweig zu bewegen ist, **dadurch**
Bewegen des Anrufzweigs von einem Ursprungsanruf zu dem Zielanruf,
wobei der Schritt des Bewegens des Anrufzweigs folgende Schritte aufweist:
Freigeben (302) der Sprachkanalressource, die durch den Anrufzweig bei dem Ursprungsanruf belegt ist, und
Zuteilen (303) von Sprachkanalressourcen des Zielanrufs zu dem Anrufzweig,
wobei
der Zustand und die Daten des Anrufzweigs bei dem Ursprungsanruf unverändert gehalten werden.

2. Verfahren nach Anspruch 1, **dadurch gekennzeichnet, dass** der Schritt des Bewegens des Anrufzweigs folgende Schritte aufweist:
Ändern einer Anrufidentifizierung des Anrufzweigs von einer Identifizierung des Ursprungsanrufs zu der Identifizierung des Zielanrufs durch Einstellen einer Nachricht des Anrufzweigs; und
Senden (514) einer Anrufzweigbewegungs-Anfrage von dem Ursprungsanruf zu dem Zielanruf; und
Bestimmen durch den Zielanruf, nachdem derselbe die Anrufzweigbewegungs-Anfrage, die von dem Ursprungsanruf gesendet wurde, empfangen hat, ob die Ressource desselben ausreichend ist, und, wenn dieselbe ausreichend ist, Zuteilen einer Ressource zu dem Anrufzweig durch den Zielanruf, wobei die Anrufzweigbewegung erfolgreich ist, ansonsten fehlerhaft ist.

3. Verfahren nach Anspruch 2, das ferner ein Benachrichtigen der Anwendung durch den Zielanruf über das Anrufzweigbewegungs-Resultat aufweist.

4. Verfahren nach Anspruch 1, **dadurch gekennzeichnet, dass** der Schritt des Bewegens des Anrufzweigs ferner ein Benachrichtigen (511) eines Benutzerendgeräts, das dem zu bewegenden Anrufzweig entspricht, dass der Anrufzweig zu dem Zielanruf bewegt wird, aufweist.

5. Verfahren nach Anspruch 1, **dadurch gekennzeichnet, dass** der Zustand und die Daten einen Medientyp, eine Abrechnungsverfahrensweise und Endgeräteinformationen aufweisen.

6. Verfahren nach Anspruch 1, **dadurch gekennzeichnet, dass** der Ursprungsanruf und der Zielanruf jeweils ein Gruppenanruf sind.

7. Verfahren nach Anspruch 1, **dadurch gekennzeichnet, dass** der Schritt des Bewegens des Anrufzweigs ferner ein Halten des Anrufzweigs in einem gesperrten Zustand bei dem Ursprungsanruf aufweist.

8. Netzstruktur für eine Anrufzweigbewegung, die ein Telekommunikationsnetz, eine fähigkeitsabstrahierende Schicht und eine Anwendungsschicht aufweist; wobei die fähigkeitsabstrahierende Schicht Fähigkeiten des Telekommunikationsnetzes in unabhängige Funktionen abstrahiert, wobei jede unabhängige Funktion eine entsprechende Schnittstelle zu der Anwendungsschicht liefert; und wobei die Anwendungsschicht durch ein Aufrufen von Schnittstellen die Dienste, die durch die unabhängigen Funktionen implementiert sind, liefern kann;
und wobei
die fähigkeitsabstrahierende Schicht ferner eine Anruf-Zweig-Bewegungs-Funktion und eine Anruf-Zweig-Bewegungs-Schnittstelle, die zu der Anwendungsschicht vorgesehen ist, mit mindestens zwei Parametern, die eine Identifizierung eines zu bewegenden Anrufzweigs und eine Identifizierung eines Zielanrufs umfassen, aufweist,
wobei die Anwendungsschicht konfiguriert ist, um
die Anruf-Zweig-Bewegungs-Schnittstelle mit einer Identifizierung eines zu bewegenden Anrufzweigs und einer Identifizierung eines Zielanrufs, zu dem der Anrufzweig zu bewegen ist, aufzurufen (202), um durch Freigeben (302) der Sprachkanalressource, die durch den Anrufzweig bei einem Ursprungsanruf belegt ist, und Zuteilen (303) von Sprachkanalressourcen des Zielanrufs zu dem Anrufzweig den Anrufzweig von dem Ursprungsanruf zu dem Zielanruf zu bewegen,
wobei
der Zustand und die Daten des Anrufzweigs bei dem Ursprungsanruf unverändert gehalten werden.

9. Netzstruktur nach Anspruch 8, **dadurch gekennzeichnet, dass** die Anruf-Zweig-Bewegungs-Schnittstelle eine neu hinzugefügte Schnittstelle zu Parlay/OSA API ist.

10. Netzstruktur nach Anspruch 8, **dadurch gekennzeichnet, dass** die Anruf-Zweig-Bewegungs-Schnittstelle eine neu hinzugefügte offene Schnittstelle ist.

11. Netzstruktur nach Anspruch 8, **dadurch gekennzeichnet, dass** die Anruf-Zweig-Bewegungs-Schnittstelle ferner einen "Ausgabe"-Parameter zum Zeigen eines Anrufzweigbewegungs-Resultats als wahr oder falsch umfasst.

## Revendications

1. Procédé mettant en oeuvre un déplacement de branche d'appel comportant les étapes consistant à
créer (201) une interface de déplacement de branche d'appel avec des paramètres de référence qui représentent un identifiant d'une branche d'appel à déplacer et un identifiant d'un appel de destination ;
invoquer (202) au moyen d'une application ladite interface de déplacement de branche d'appel avec un identifiant d'une branche d'appel à déplacer et un identifiant d'un appel de destination vers lequel ladite branche d'appel doit être déplacée, ce qui permet de
déplacer ladite branche d'appel d'un appel original audit appel de destination,
moyennant quoi l'étape de déplacement de ladite branche d'appel comporte les étapes consistant à
libérer (302) la ressource de voie téléphonique occupée par ladite branche d'appel dans ledit appel original et
attribuer (303) des ressources de voie téléphonique dudit appel de destination à ladite branche d'appel
dans lequel
l'état et les données de ladite branche d'appel sont maintenus inchangés dans ledit appel original.

2. Procédé selon la revendication 1, **caractérisé en ce que**, ladite étape de déplacement de ladite branche d'appel comporte les étapes consistant à :
modifier un identifiant d'appel de ladite branche d'appel depuis un identifiant dudit appel original audit identifiant dudit appel de destination en paramétrant un message de ladite branche d'appel ; et
transmettre (514) une demande de déplacement de branche d'appel dudit appel original audit appel de destination ; et,
postérieurement à la réception de ladite demande de déplacement de branche d'appel transmise à partir dudit appel original, ledit appel de destination déterminant si ses ressources sont suffisantes, et le cas échéant, ledit appel de destination attribuant des ressources à ladite branche d'appel et par conséquent ledit déplacement de branche d'appel réussit, et dans le cas contraire, ne réussit pas.

3. Procédé selon la revendication 2, comportant en outre l'étape consistant à indiquer au moyen dudit appel de destination à ladite application le résultat du déplacement de branche d'appel.

4. Procédé selon la revendication 1, **caractérisé en ce que**, l'étape consistant à déplacer ladite branche d'appel comporte en outre l'étape consistant à indiquer (511) à un terminal d'utilisateur correspondant à ladite branche d'appel à déplacer que ladite branche d'appel sera déplacée audit appel de destination.

5. Procédé selon la revendication 1, **caractérisé en ce que**, ledit état et lesdites données comportent le type de support, la politique de facturation et les informations connexes au terminal.

6. Procédé selon la revendication 1, **caractérisé en ce que**, ledit appel original et ledit appel de destination représentent un appel à plusieurs abonnées, respectivement.

7. Procédé selon la revendication 1, **caractérisé en ce que**, l'étape de déplacement de ladite branche d'appel comporte en outre l'étape consistant à maintenir ladite branche d'appel dans un état d'attente dans ledit appel original.

8. Structure de réseau en vue d'un déplacement de branche d'appel comportant un réseau de télécommunication, une couche d'extraction de capacités et une couche application ; ladite couche d'extraction de capacités extrait des capacités du réseau de télécommunication dans des fonctions indépendantes, où chaque fonction indépendante délivre une interface correspondante à ladite couche application ; et, via l'invocation d'interfaces, ladite couche application peut délivrer les services mis en oeuvre par les fonctions indépendantes ;
et dans laquelle
ladite couche d'extraction de capacités comporte en outre une fonction de déplacement de branche d'appel, et une interface de déplacement de branche d'appel délivrées à ladite couche application avec au moins deux paramètres comprenant un identifiant d'un branche d'appel à déplacer et un identifiant d'un appel de destination
dans laquelle ladite couche application est configurée pour
invoquer (202) ladite interface de déplacement de branche d'appel avec un identifiant d'une branche d'appel à déplacer et un identifiant d'un appel de destination vers lequel ladite branche d'appel doit être déplacée afin de déplacer ladite branche d'appel d'un appel original audit appel de destination en libérant (302) la ressource de voie téléphonique occupée par ladite branche d'appel dans ledit appel original et en attribuant (303) des ressources de voie téléphonique dudit appel de destination à ladite branche d'appel
dans laquelle
l'état et les données de ladite branche d'appel sont maintenus inchangés dans ledit appel original.

9. Structure de réseau selon la revendication 8, **caractérisée en ce que**, ladite interface de déplacement de branche d'appel est une interface nouvellement ajoutée à l'interface de programmation Parlay/OSA.

10. Structure de réseau selon la revendication 8, **caractérisée en ce que** ladite interface de déplacement de branche d'appel est une interface ouverte nouvellement ajoutée.

11. Structure de réseau selon la revendication 8, **caractérisée en ce que**, ladite interface de déplacement de branche d'appel inclut en outre un paramètre « sorti » en vue de montrer un résultat de déplacement de branche d'appel du type : vrai ou faux.
